# EUROPEAN PATENT SPECIFICATION

(11) **EP 1 669 661 B1**
(45) Date of publication and mention of the grant of the patent: **24.12.2008**
(21) Application number: 05025240.2
(22) Date of filing: 18.11.2005
(51) Int. Cl.: F16M 11/00, F16M 11/24

(54) **Electronic apparatus**
Elektronische Vorrichtung
Appareil électronique

(30) Priority: 10.12.2004 CN 200410101976
(43) Date of publication of application: 14.06.2006
(73) Proprietor: ASUSTeK Computer Inc., Peitou Taipei (TW)
(72) Inventor: Chen, Yi-Jen, Luzhou City Taipei County (TW)
(74) Representative: Weber, Joachim

(56) References cited:
- EP-A- 1 318 445
- JP-A- 2002 160 586
- US-A- 2 980 456
- US-A- 6 016 171
- US-A1- 2004 165 344
- US-A1- 2005 051 693

## Description

### BACKGROUND

The invention relates to an electronic apparatus, and in particular to an electronic apparatus providing rapid assembly/disassembly and height adjustment functions.

From US 6,016,171 there is known an electronic apparatus comprising a pedestal comprising a guiding member, a main body connected to the guiding member and comprising a guiding groove in which the guiding member relatively slides, and a positioning mechanism.

A thin TV or display often comprises a monitor and a pedestal. The thin TV or display is assembled by fastening bolts to the monitor and pedestal.

A few drawbacks exist when the monitor is fixed to the pedestal by bolts. As the size of the thin TVs (or monitors) increases, the weight thereof increases correspondingly. When a thin TV or display is assembled, the monitor and pedestal are often placed at a sloped angle or horizontally. The display panel of the monitor is thus easily scraped or damaged. In another aspect, when the monitor and pedestal are not placed at a sloped angle or horizontally, at least two operators are required to assemble the thin TV or display, thereby increasing the number of laborers. Moreover, a. screwdriver is required for assembly of the monitor and pedestal, causing inconvenience. Furthermore, when the height of the thin TV (or monitor) is adjusted, the bolts must be removed from the monitor and pedestal. The bolts are again fastened to the monitor and pedestal after the height of the thin TV (or monitor) is adjusted, further increasing complexity of height adjustment.

### SUMMARY

Accordingly, an exemplary embodiment of the invention provides an electronic apparatus providing height adjustment functions. The electronic apparatus comprises a pedestal, a main body, and a positioning mechanism. The pedestal comprises a guiding member. The main body is detachably connected to the guiding member and comprises a guiding groove located in which the guiding member relatively slides. The positioning mechanism is movably disposed in the guiding member and guiding groove to control the sliding position of the guiding member with respect to the guiding groove.

In an embodiment of the electronic apparatus, the guiding member further comprises a first through hole. The guiding groove further comprises at least one positioning hole. The positioning mechanism engages the positioning hole via the first through hole, controlling the sliding position of the guiding member with respect to the guiding groove.

In an embodiment of the electronic apparatus, the guiding member further comprises a second through hole. The positioning mechanism further comprises an engaging member, a resilient member, and a retardant member. The second through hole is coaxially connected to the first through hole. The engaging member is disposed in the first and second through holes. The' retardant member covers and is fixed on the second through hole. The resilient member is disposed in the second through hole and between the engaging member and the retardant member, providing resilience to the engaging member.

In an embodiment of the electronic apparatus, the retardant member further comprises a third through hole and the engaging member further comprises a pillar, an abutting portion, and an engaging portion. The third through hole is coaxially connected to the second through hole. The abutting portion is between the pillar and the engaging portion and is disposed in the second through hole. The pillar is disposed in the second and third through holes and extends outside the third through hole. The engaging portion is disposed in and extends outside the first through hole, engaging the positioning hole. The resilient member is between the abutting portion and the retardant member and is disposed at the periphery of the pillar.

In an embodiment of the electronic apparatus, the main body further comprises a guiding sloped surface connected to the guiding groove. The engaging portion engages the positioning hole by sliding on the guiding sloped surface and guiding groove.

In an embodiment of the electronic apparatus, the resilient member comprises a spring.

In an embodiment of the electronic apparatus, the cross sections of the guiding groove and guiding member are substantially the same.

In an embodiment of the electronic apparatus, the main body comprises a monitor.

### DESCRIPTION OF THE DRAWINGS

The invention can be more fully understood by reading the subsequent detailed description and examples with references made to the accompanying drawings, wherein:
FIG. 1 is an exploded perspective view of the electronic apparatus of an embodiment of the invention;
FIG. 2 is a partial enlarged view of FIG. 1;
FIG. 3 is a partial assembly cross section of the guiding member and positioning mechanism of the electronic apparatus of an embodiment of the invention;
FIG. 4 is a schematic view showing assembly of the electronic apparatus of an embodiment of the invention;
FIG. 5 is a schematic view showing assembly following FIG. 4;
FIG. 6 is a schematic view showing assembly following FIG. 5; and
FIG. 7 is a schematic view showing assembly following FIG. 6.

### DETAILED DESCRIPTION

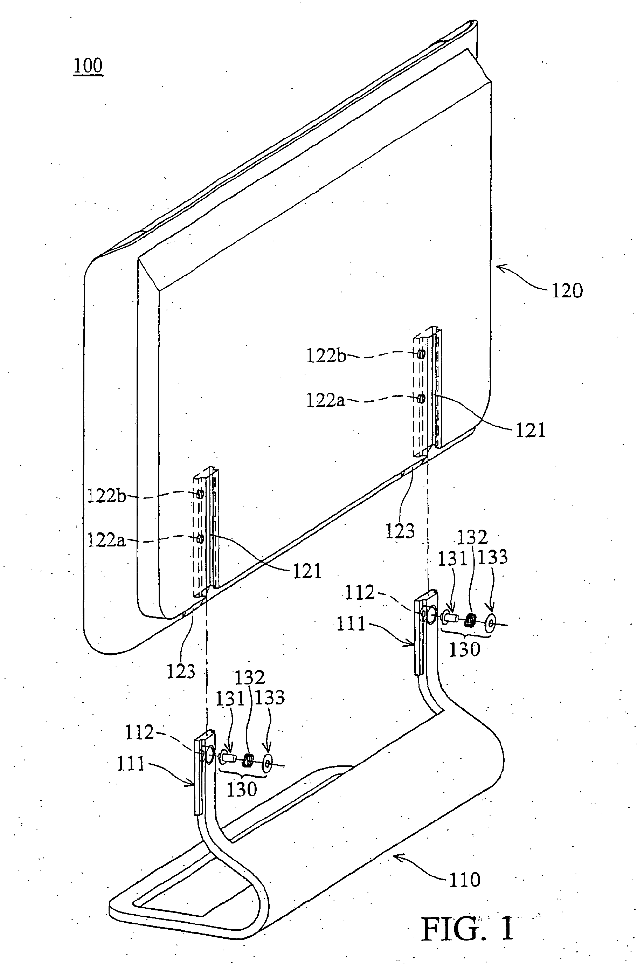

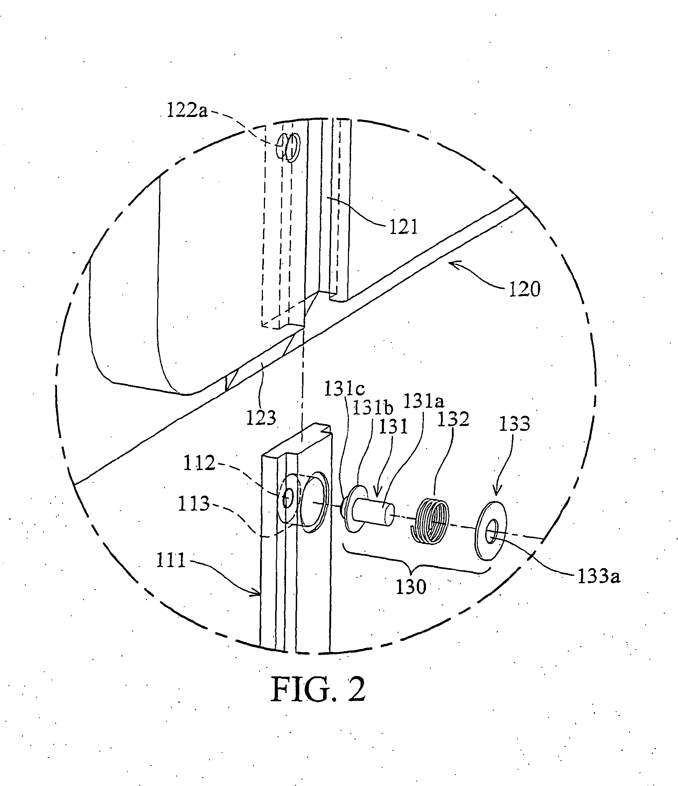

Referring to FIG. 1 and FIG. 2, the electronic apparatus 100 comprises a pedestal 110, a main body (monitor) 120, and two positioning mechanisms 130. The electronic apparatus 100 is, for example, a television. Although provided with two positioning mechanisms 130, the electronic apparatus 100 is not limited to having two positioning mechanisms 130. Namely, the electronic apparatus 100 may selectively comprise only one positioning mechanism 130.

The pedestal 110 comprises two opposing guiding members 111. Each guiding member 111 comprises a first through hole 112 and a second through hole 113 coaxially connected to the first through hole 112. In this embodiment, the diameter of the second through hole 113 exceeds that of the first through hole 112. Specifically, the diameters of the first through hole 112 and second through hole 113 can be designed as required. Namely, the diameter of the second through hole 113 may be, alternatively, less than that of the first through hole 112. Moreover, the profile of the pedestal 110 can be changed as required, and the pedestal 110 is not limited to having two opposing guiding members 111. Namely, the pedestal 110 may selectively comprise only one guiding member 111.

The main body 120 is detachably connected to the guiding members 111 of the pedestal 110. Specifically, the main body 120 comprises two guiding grooves 121 corresponding to the guiding members 111. In this embodiment, the cross section of the guiding grooves 121 is substantially the same as that of the guiding members 111. Additionally, each guiding groove 121 comprises a plurality of positioning holes (122a, 122b) formed therein and located on different levels. Moreover, the main body 120 comprises two guiding sloped surfaces 123 corresponding and connected to the guiding grooves 121. Similarly, the main body 120 is not limited to having two guiding grooves 121 and two guiding sloped surfaces 123.

Alternatively, the main body 120 may selectively comprise only one guiding groove 121 and only one guiding sloped surface 123.

Moreover, when the main body 120 is a monitor, the guiding grooves 121 can be formed on the back of the monitor and a display panel (not shown) can be disposed on the front thereof.

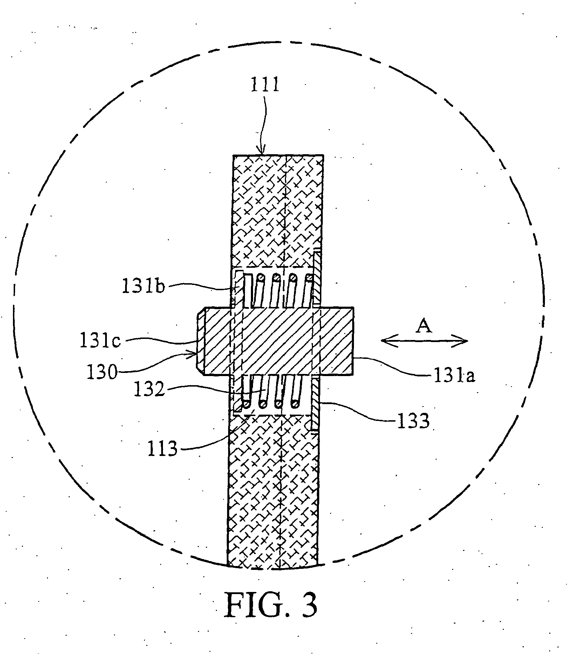

Each positioning mechanism 130 is movably disposed in each guiding member 111 of the pedestal 110 and each guiding groove 121 of the main body 120. Specifically, each positioning mechanism 130 comprises an engaging member 131, a resilient member 132, and a retardant member 133. As shown in FIG. 2 and FIG. 3, the retardant member 133 covers and is fixed on the second through hole 113 of the guiding member 111. Additionally, the retardant member 133 comprises a third through hole 133a coaxially connected to the second through hole 113. The engaging member 131 comprises a pillar 131a, an abutting portion 131b, and an engaging portion 131c. The abutting portion 131b is between the pillar 131a and the engaging portion 131c and is disposed in the second through hole 113. The pillar 131a is disposed in the second through hole 113 and third through hole 133a of the retardant member 133 and extends outside the third through hole 133a. The engaging portion 131c is disposed in the first through hole 112 and extends outside the first through hole 112. The resilient member 132 is disposed in the second through hole 113 and between the abutting portion 131b of the engaging member 131 and the retardant member 133. Specifically, the resilient member 132 is disposed at the periphery of the pillar 131a of the engaging member 131. Accordingly, the engaging member 131 of the positioning mechanism 130 can move forward and backward, as indicated by arrow A of FIG. 3.

Moreover, the resilient member 132 is, for example, a spring.

The following description is directed to assembly and disassembly of the electronic apparatus 100 (such as a television).

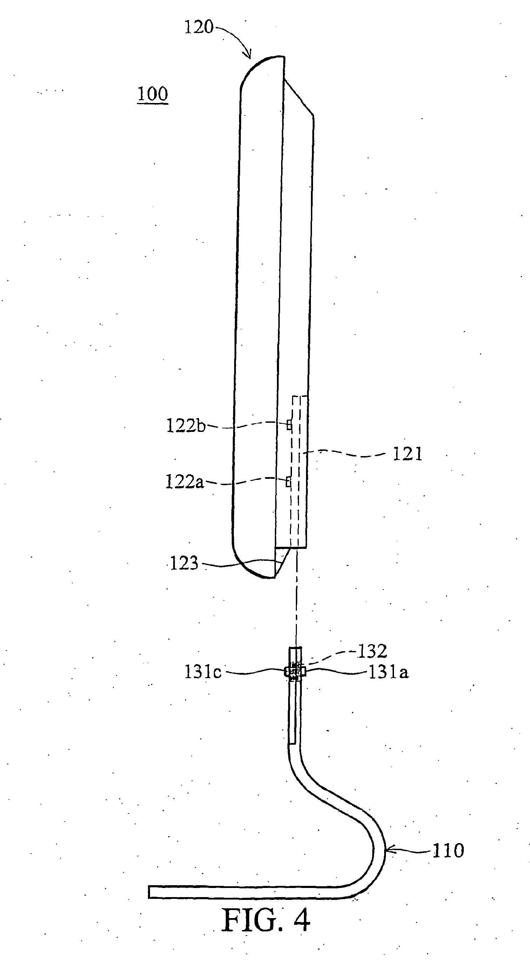

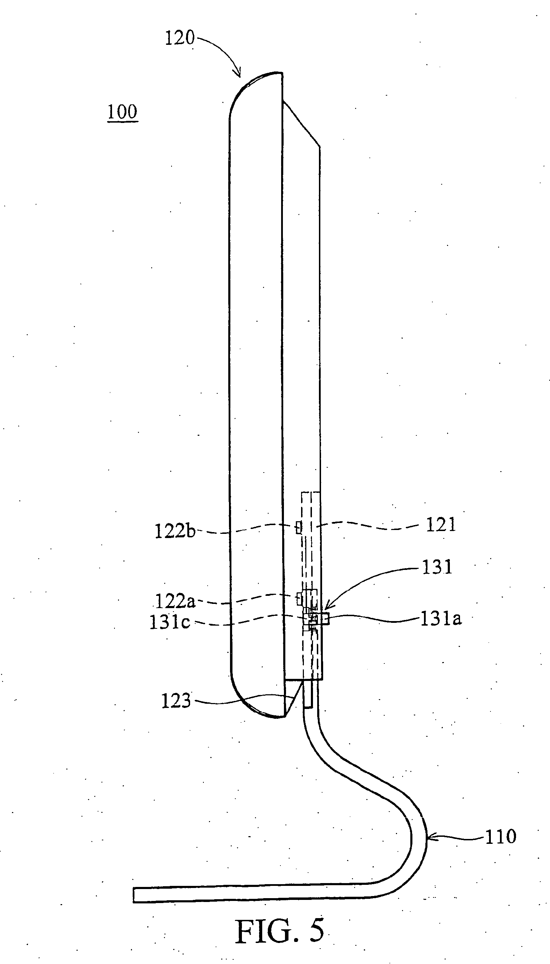

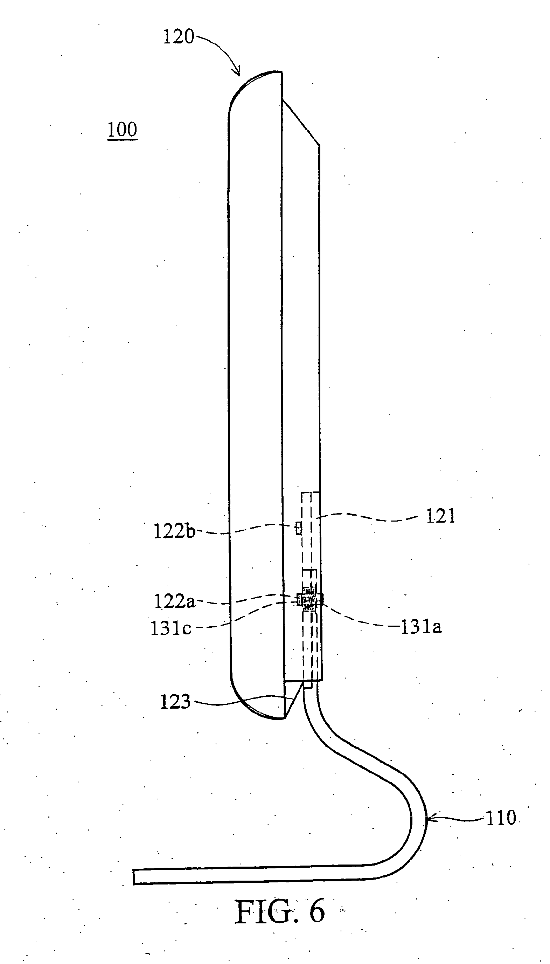

When the main body (monitor) 120 is positioned on the pedestal 110, as shown in FIG. 4, the guiding grooves 121 of the main body 120 are respectively aimed at the guiding members 111 of the pedestal 110 and are moved downward (or relatively). As shown in FIG. 5, the guiding members 111 are simultaneously inserted into the corresponding guiding grooves 121. At this point, the engaging portion 131c of each engaging member 131 slides on each guiding sloped surface 123 of the main body 120. Then, the engaging portions 131c and guiding members 111 simultaneously slide in the guiding grooves 121. Because of the profiles of the guiding grooves 121 and guiding members 111, the engaging portions 131c of the engaging members 131 are pushed into (the second through holes 113 of) the guiding members 111. At this point, the abutting portion 131b and pillar 131a of each engaging member 131 move toward the third through hole 133a, and the resilient member 132 disposed between the abutting portion 131b and the retardant member 133 is compressed to provide resilience. The main body 120 continues to move downward until the engaging portion 131c of each engaging member 131 slide to the first positioning hole 122a in each guiding groove 121. The engaging portion 131c rapidly ejects and engages the first positioning hole 122a by the resilience provided by the resilient member 132, as shown in FIG. 6. At this point, the main body 120 and pedestal 110 are completely assembled.

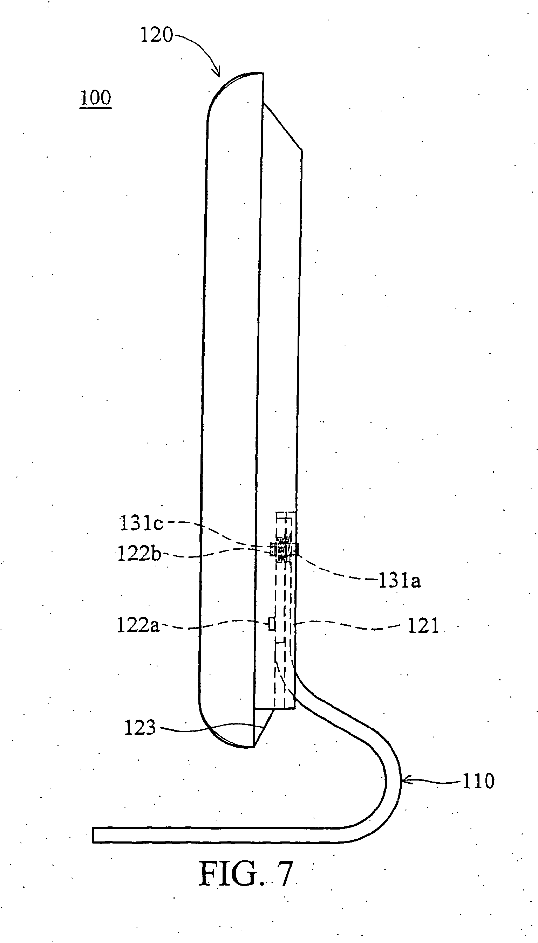

Moreover, when the height of the main body 120 relative to the pedestal 110 is adjusted, the engaging member 131 (or pillar 131a) can be pulled outward to separate the engaging portion 131c from the first positioning hole 122a. At this point, the resilient member 132 disposed between the abutting portion 131b and the retardant member 133 is compressed to again provide resilience. The main body 120 is then moved downward and the engaging member 131 (or pillar 131a) is released. When the engaging portion 131c of each engaging member 131 slides to the second positioning hole 122b in each guiding groove 121, the engaging portion 131c rapidly ejects and engages the second positioning hole 122b by the resilience provided by the resilient member 132, as shown in FIG. 7. At this point, adjustment of the height of the main body 120 with respect to the pedestal 110 is complete. Specifically, the electronic apparatus 100 or main body 120 is not limited to having only two positioning holes 122a and 122b. Namely, the main body 120 may selectively comprise more positioning holes in each guiding groove 121, enabling different adjustment of the height of the main body 120 with respect to the pedestal 110.

In another aspect, when the main body 120 is separated from the pedestal 110, the engaging member 131 (or pillar 131a) can be pulled out of the first positioning hole 122a or second positioning hole 122b. The main body 120 is then simultaneously moved upward (or relatively) until it is completely separated from the pedestal 110.

In conclusion, the electronic apparatus 100 can be rapidly assembled and disassembled, and the height thereof can be easily adjusted. Moreover, the electronic apparatus 100 can be rapidly assembled and disassembled in the absence of any assisting tool. Thus, troubles of missing of bolts are prevented.

While the invention has been described by way of example and in terms of preferred embodiment, it is to be understood that the invention is not limited thereto. To the contrary, it is intended to cover various modifications and similar arrangements (as would be apparent to those skilled in the art) and to limit the invention only by the scope of the appended claims.

## Claims

1. An electronic apparatus (100), comprising:
a pedestal (110) comprising a guiding member (111);
a main body (120) detachably connected to the guiding member (111) and comprising a guiding groove (121) in which the guiding member (111) relatively slides; and
a positioning mechanism (130) movably disposed in the guiding member (111) and guiding groove (121) to control the sliding position of the guiding member (111) with respect to the guiding groove (121).

2. The electronic apparatus (100) as claimed in claim 1, wherein the guiding member (111) further comprises a first through hole (112), the guiding groove (121) further comprises at least one positioning hole (122a, 122b), and the positioning mechanism (130) engages the positioning hole (122a, 122b) via the first through hole (112), controlling the sliding position of the guiding member (111) with respect to the guiding groove (121).

3. The electronic apparatus (100) as claimed in claim 2, wherein the guiding member (111) further comprises a second through hole (113), the positioning mechanism (130) further comprises an engaging member (131), a resilient member (132), and a retardant member (133), the second through hole (113) is coaxially connected to the first through hole (112), the engaging member (131) is disposed in the first and second through holes (112, 113), the retardant member (133) covers and is fixed on the second through hole (113), and the resilient member (132) is disposed in the second through hole (113) and between the engaging member (131) and the retardant member (133), providing resilience to the engaging member (131).

4. The electronic apparatus (100) as claimed in claim 3, wherein the retardant member (133) further comprises a third through hole (133a), the engaging member (131) further comprises a pillar (131a), an abutting portion (131b), and an engaging portion (131c), the third through hole (133a) is coaxially connected to the second through hole (113), the abutting portion (131b) is between the pillar (131a) and the engaging portion (131c) and is disposed in the second through hole (113), the pillar (131a) is disposed in the second and third through holes (113, 133a) and extends outside the third through hole (133a), the engaging portion (131c) is disposed in and extends outside the first through hole (112), engaging the positioning hole (122a, 122b), and the resilient member (132) is between the abutting portion (131b) and the retardant member (133) and is disposed at the periphery of the pillar (131a).

5. The electronic apparatus (100) as claimed in claim 4, wherein the main body (120) further comprises a guiding sloped surface (123) connected to the guiding groove (121), and the engaging portion (131c) engages the positioning hole (122a, 122b) by sliding on the guiding sloped surface (123) and guiding groove (121).

6. The electronic apparatus (100) as claimed in claim 3, wherein the resilient member (132) comprises a spring.

7. The electronic apparatus (100) as claimed in claim 1, wherein the cross sections of the guiding groove (121) and guiding member (111) are substantially the same.

8. The electronic apparatus (100) as claimed in claim 1, wherein the main body (120) comprises a monitor.

## Patentansprüche

1. Elektronische Vorrichtung (100):
- mit einem Ständer (110), der ein Führungselement (111) aufweist;
- mit einem Hauptkörper (120), der mit dem Führungselement (111) lösbar verbunden ist und eine Führungsnut (121) aufweist, in der das Führungselement (111) relativ gleitet; und
- mit einem Positioniermechanismus (130), der im Führungselement (111) und der Führungsnut (121) beweglich angeordnet ist, um die Gleitposition des Führungselements (111) bezüglich der Führungsnut (121) zu steuern/regeln.

2. Elektronische Vorrichtung (100) gemäß Anspruch 1, wobei das Führungselement (111) ferner eine erste Durchgangsbohrung (112) aufweist, wobei die Führungsnut (121) ferner mindestens eine Positionierbohrung (122a, 122b) aufweist, und der Positioniermechanismus (130) mit der Positionierbohrung (122a, 122b) über die erste Durchgangsbohrung (112) in Eingriff ist, wobei die Gleitposition des Führungselements (111) bezüglich der Führungsnut (121) gesteuert/geregelt wird.

3. Elektronische Vorrichtung (100) gemäß Anspruch 2, wobei das Führungselement (111) ferner eine zweite Durchgangsbohrung (113) aufweist, wobei der Positioniermechanismus (130) ferner ein Eingriffselement (131), ein elastisches Element (132) und ein Hemmelement (133) aufweist, wobei die zweite Durchgangsbohrung (113) koaxial mit der ersten Durchgangsbohrung (112) verbunden ist, das Eingriffselement (131) in den ersten und zweiten Durchgangsbohrungen (112, 113) angeordnet ist, das Hemmelement (133) die zweite Durchgangsbohrung (113) abdeckt und darauf befestigt ist, und das elastische Element (132) in der zweiten Durchgangsbohrung (113) und zwischen dem Eingriffselement (131) und Hemmelement (133) angeordnet ist, wobei die Elastizität zum Eingriffselement (131) vorgesehen ist.

4. Elektronische Vorrichtung (100) gemäß Anspruch 3, wobei das Hemmelement (133) ferner eine dritte Durchgangsbohrung (133a) aufweist, wobei das Eingriffselement (131) ferner eine Säule (131a), einen Anstoßbereich (131b) und einen Eingriffsbereich (131c) aufweist, wobei die dritte Durchgangsbohrung (133a) koaxial mit der zweiten Durchgangsbohrung (113) verbunden ist, der Anstoßbereich (131 b) zwischen der Säule (131 a) und dem Eingriffsbereich (131 c) liegt und in der zweiten Durchgangsbohrung (113) angeordnet ist, wobei die Säule (131a) in den zweiten und dritten Durchgangsbohrungen (113, 133a) angeordnet ist und sich außerhalb der dritten Durchgangsbohrung (133a) erstreckt, wobei der Eingriffsbereich (133c) in der ersten Durchgangsbohrung (112) angeordnet ist und sich außerhalb der ersten Durchgangsbohrung erstreckt, und mit der Positionierbohrung (122a, 122b) in Eingriff ist, und wobei das elastische Element (132) zwischen dem Anstoßbereich (131b) und dem Hemmelement (133) liegt und am Umfang der Säule (131 a) angeordnet ist.

5. Elektronische Vorrichtung (100) gemäß Anspruch 4, wobei der Hauptkörper (120) ferner eine geneigte Führungsfläche (123) aufweist, die mit der Führungsnut (121) verbunden ist, und der Eingriffsbereich (131c) mit der Positionierbohrung (122a, 122b) durch Gleiten auf der geneigten Führungsfläche (123) und der Führungsnut (121) in Eingriff ist.

6. Elektronische Vorrichtung (100) gemäß Anspruch 3, wobei das elastische Element (132) eine Feder aufweist.

7. Elektronische Vorrichtung (100) gemäß Anspruch 1, wobei die Querschnitte der Führungsnut (121) und des Führungselements (111) im Wesentlichen dieselben sind.

8. Elektronische Vorrichtung (100) gemäß Anspruch 1, wobei der Hauptkörper (120) einen Monitor aufweist.

## Revendications

1. Dispositif électronique (100), comprenant :
un socle (110) comprenant un élément de guidage (111);
un corps principal (120) relié de façon amovible à l'élément de guidage (111) et comprenant une rainure de guidage (121) dans laquelle l'élément de guidage (111) coulisse de manière relative ; et
un mécanisme de positionnement (130) disposé de façon mobile dans l'élément de guidage (111) et la rainure de guidage (121) pour contrôler la position de coulissement de l'élément de guidage (111) par rapport à la rainure de guidage (121).

2. Dispositif électronique (100) selon la revendication 1, dans lequel l'élément de guidage (111) comprend en outre un premier trou traversant (112), la rainure de guidage (121) comprend en outre au moins un trou de positionnement (122a, 122b), et le mécanisme de positionnement (130) s'engage dans le trou de positionnement (122a, 122b) par l'intermédiaire du premier trou traversant (112), contrôlant la position de coulissement de l'élément de guidage (111) par rapport à la rainure de guidage (121).

3. Dispositif électronique (100) selon la revendication 2, dans lequel l'élément de guidage (111) comprend en outre un deuxième trou traversant (113), le mécanisme de positionnement (130) comprend en outre un élément d'engagement (131), un élément élastique (132) et un élément retardateur (133), le deuxième trou traversant (113) est relié de façon coaxiale au premier trou traversant (112), l'élément d'engagement (131) est disposé dans les premier et deuxième trous traversants (112, 113), l'élément retardateur (133) couvre le deuxième trou traversant (113) et est fixé sur celui-ci et l'élément élastique (132) est disposé dans le deuxième trou traversant (113) et entre l'élément d'engagement (131) et l'élément retardateur (133), conférant de l'élasticité à l'élément d'engagement (131).

4. Dispositif électronique (100) selon la revendication 3, dans lequel l'élément retardateur (133) comprend en outre un troisième trou traversant (133a), l'élément d'engagement (131) comprend en outre un montant (131a), une partie d'aboutement (131b) et une partie d'engagement (131c), le troisième trou traversant (133a) est relié de façon coaxiale au deuxième trou traversant (113), la partie d'aboutement (131b) se trouve entre le montant (131a) et la partie d'engagement (131c) et est disposée dans le deuxième trou traversant (113), le montant (131a) est disposé dans les deuxième et troisième trous traversants (113, 133a) et s'étend à l'extérieur du troisième trou traversant (133a), la partie d'engagement (131c) est disposée dans le premier trou traversant (112) et s'étend à l'extérieur de celui-ci, coopérant avec le trou de positionnement (122a, 122b), et l'élément élastique (132) se trouve entre la partie d'aboutement (131b) et l'élément retardateur (133) et est disposé à la périphérie du montant (131a).

5. Dispositif électronique (100) selon la revendication 4, dans lequel le corps principal (120) comprend en outre une surface de guidage inclinée (123) reliée à la rainure de guidage (121), et la partie d'engagement (131c) coopère avec le trou de positionnement (122a, 122b) en coulissant sur la surface de guidage inclinée (123) et la rainure de guidage (121).

6. Dispositif électronique (100) selon la revendication 3, dans lequel l'élément élastique (132) comprend un ressort.

7. Dispositif électronique (100) selon la revendication 1, dans lequel les sections transversales de la rainure de guidage (121) et de l'élément de guidage (111) sont sensiblement identiques.

8. Dispositif électronique (100) selon la revendication 1, dans lequel le corps principal (120) comprend un moniteur.
